# EUROPÄISCHE PATENTSCHRIFT

(11) **EP 0 905 736 B1**
(45) Veröffentlichungstag und Bekanntmachung des Hinweises auf die Patenterteilung: **04.12.2002**
(21) Anmeldenummer: 98117741.3
(22) Anmeldetag: 18.09.1998
(51) Int. Cl.: H01H 83/12

(54) **Steuerbaustein**
Control module
Module de controle programmable

(30) Priorität: 30.09.1997 DE 19743038
(43) Veröffentlichungstag der Anmeldung: 31.03.1999
(73) Patentinhaber: SIEMENS AKTIENGESELLSCHAFT, 80333 München (DE)
(72) Erfinder: Lösche, Peter, Dipl.-Ing.(FH), 93107 Thalmassing-Luckenpaint (DE)

(56) Entgegenhaltungen:
- EP-A- 0 467 504
- EP-A- 0 473 271
- DE-A- 3 912 601

## Beschreibung

Die Erfindung bezieht sich auf einen Steuerbaustein für einen auf eine Sammelschiene aufsetzbaren Unterspannungsauslöser.

Ein Unterspannungsauslöser in Kombination mit einem Leitungsschutzschalter dient üblicherweise dem Schutz von Leitungen in Installationen und Anlagen gegen Überlast und Kurzschluß. Dazu umfaßt der Leitungsschutzschalter einen thermischen Auslöser, z.B. in Form eines Bimetalls, der überlastzeitabhängig verzögert auslöst, und eine unverzögert auslösende magnetische oder elektromagnetische Auslöseeinrichtung für hohe Stoß- und Kurzschlußströme.

Der Unterspannungsauslöser löst den Leitungsschutzschalter bei Absinken der Netzspannung unter einen Schwellwert oder bei einem Ausfall der Netzspannung aus. Diese Auslösung erfolgt nach Überschreiten einer von der mechanischen Trägheit des Systems abhängigen Ansprechzeit. Eine möglichst kurze Ansprechzeit gewährleistet einen guten Schutz für eine durch die Schutzschalteranordnung zu schützende Anlage. Da erkanntermaßen für bestimmte Anwendungen eine kurzfristige Unterbrechung der Spannungsversorgung unkritisch ist, wird häufig die Möglichkeit einer Beeinflussung der Ansprechzeit und damit einer Variierung einer Auslösezeitverzögerung des Unterspannungsauslösers gewünscht.

Aus der DE-A 39 12 601 ist eine der Abschaltkinematik eines Schutzschaltschützes zugeordnete Abschaltvorrichtung zum zeitverzögerten Abschalten bei Mindestspannung bekannt. Dazu umfaßt die Vorrichtung innerhalb eines auf eine Sammelschiene aufsetzbaren Gehäuses ein mit einem Schaltschloß mechanisch gekoppeltes Betätigungsrelais, dessen Wicklungsanschlüsse mit einem Steuerschaltkreis verbunden sind. Dieser umfaßt einen ersten Schaltkreisteil zum Regeln einer Ansprechschwelle und einen zweiten Schaltkreisteil zur Definition der Auslösezeitverzögerung. Diese ist im wesentlichen durch einen Kondensator in einem aus diesem und einem Widerstand aufgebauten RC-Verzögerungsglied festgelegt, so daß eine nachträgliche Veränderung der Auslösezeitverzögerung durch den Anwender nicht möglich ist.

Der Erfindung liegt die Aufgabe zugrunde, die Auslösezeitverzögerung für einen Unterspannungsauslöser, insbesondere für einen mit einem Leitungsschutzschalter gekoppelten Unterspannungsauslöser, variierbar zu gestalten.

Diese Aufgabe wird erfindungsgemäß gelöst durch einen Steuerbaustein in einem separaten und auf die Sammelschienen aufsetzbaren Gehäuse, in das eine elektronische Schaltung zur Auslösezeitverzögerung (Verzögerungsglied) integriert ist. Dadurch ist das Verzögerungsglied vom Unterspannungsauslöser mechanisch unabhängig und somit frei anbaubar, so daß die Verzögerungszeit vom Anwender in einfacher Weise variiert werden kann.

Die Bereitstellung eines separaten Steuerbausteins und damit eines getrennt anbaubaren Verzögerungsgliedes ermöglicht einerseits einen vereinfachten Aufbau des Unterspannungsauslösers, da dessen Steuerelektronik in den Steuerbaustein integriert werden kann. Andererseits kann durch eine geeignete zusammenschaltung einer Anzahl derartiger Verzögerungsglieder oder durch einfache Drahtbrückenverbindungen an einem einzelnen Steuerbaustein die Auslösezeitverzögerung, d. h. der Überbrückungs- oder Verzögerungszeitraum, vom Anwender selbst festgelegt werden. Der Steuerbaustein kann innerhalb einer komplexen Schutzschalteranordnung z. B. auch an einem Ende der Sammelschiene, d.h. im Verteiler, plaziert werden. Da der Steuerbaustein unabhängig vom Unterspannungsauslöser entwickelt und hergestellt werden kann, wird eine erhebliche Reduzierung der Entwicklungs- und Fertigungskosten sowohl für den Unterspannungsauslöser als auch für den Steuerbaustein selbst erzielt.

In vorteilhafter Ausgestaltung umfaßt die elektronische Schaltung des Steuerbausteins zur Auslösezeitverzögerung in einer ersten Teilschaltung eine Diode und vorzugsweise zwei mit dieser kathodenseitig verbundene Kondensatoren. Diese können durch entsprechende, außerhalb des Gehäuses vorzunehmende Verbindungen am Steuerbaustein einzeln oder zusammengeschaltet an den Unterspannungsauslöser angeschlossen werden. Somit können bereits mit zwei Kondensatoren unterschiedlicher Kapazitätswerte drei verschiedene Varianten realisiert werden, indem entweder einer der Kondensatoren oder eine Parallelschaltung dieser beiden Kondensatoren außerhalb des Gehäuses hergestellt wird.

In zweckmäßiger Weiterbildung umfaßt die elektronische Schaltung darüber hinaus eine zweite Teilschaltung zur Spannungsbegrenzung. Diese ist wiederum vorteilhafterweise durch mindestens einen spannungsabhängigen Widerstand mit Schutzwiderstand realisiert. Die zweite Teilschaltung bildet somit eine Schutzbeschaltung für die die Auslösezeitverzögerung bestimmende erste Teilschaltung.

Die Schaltung umfaßt weiter zweckmäßigerweise in einer dritten Teilschaltung vorzugsweise zwei Kondensatoren, die mit eingangsseitigen Klemmkontakten verbunden sind. Des weiteren weist die dritte Teilschaltung eine direkte Verbindung eines der Widerstände der zweiten Teilschaltung zu einem am Gehäuse vorgesehenen Klemmkontakt auf. Dadurch ist der Steuerbaustein für unterschiedliche Gleichspannungen und für Wechselspannung einsetzbar.

Die intern verdrahteten Bauelemente der elektronischen Schaltung des Steuerbausteins sind mit eingangs- und ausgangsseitigen Klemmkontakten verbunden, die in einer entsprechenden Anzahl von Gehäuseöffnungen des Steuerbausteins angeordnet und von außen zugänglich sind. Dabei sind mindestens zwei, vorzugsweise drei, eingangsseitige Klemmkontakte zum Anlegen unterschiedlicher Wechsel- und Gleichspannungen vorgesehen. Außerdem sind mindestens zwei, vorzugsweise ebenfalls drei, ausgangsseitige Klemmkontakte vorgesehen, über die eine elektrische Verbindung zum Unterspannungsauslöser hergestellt werden kann. Durch geeignete Verbindungen einzelner Klemmkontakte außerhalb des Gehäuses des Steuerbausteins können unterschiedliche Kombinationen für verschiedene Eingangsspannungen realisiert werden. In Abhängigkeit von der externen Verdrahtung oder Verbindung zwischen den entsprechenden Klemmkontakten ergeben die einzelnen Varianten mit unterschiedlichen Auslösezeitverzögerungen.

Ein Ausführungsbeispiel der Erfindung wird anhand einer Zeichnung näher erläutert. Darin zeigen:
- FIG 1 und 2: schematisch alternative Schutzschalteranordnungen mit einem Unterspannungsauslöser in Verbindung mit seitlich angebauten Leitungsschutzschaltern und mit einem separaten Steuerbaustein,
- FIG 3: in perspektivischer Darstellung ein Gehäuse des auf eine Sammelschiene aufsetzbaren Steuerbausteins gemäß FIG 1 und 2, und
- FIG 4 und 5: zwei Schaltungsvarianten eines Steuerbausteins gemäß FIG 3.

Einander entsprechende Teile sind in allen Figuren mit den gleichen Bezugszeichen versehen.

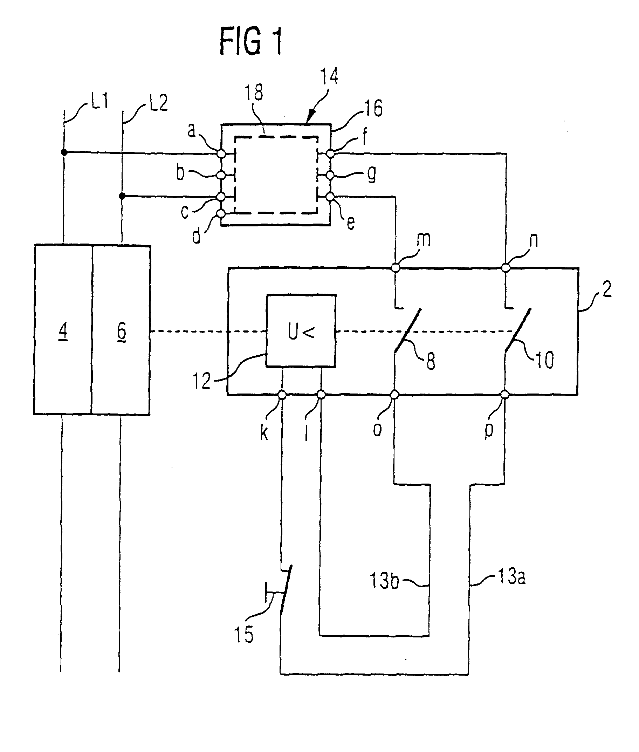

Figur 1 zeigt eine Schutzschalteranordnung mit einem Unterspannungsauslöser 2, der mit zwei aneinander gereihten Leitungsschutzschaltern 4 und 6 sowie mit zwei Hilfskontakten gekoppelt ist, dessen zwei Schaltstrecken 8 und 10 dargestellt sind. Der Unterspannungsauslöser 2 umfaßt eine Auslöseeinrichtung 12, die mit den Leitungsschutzschaltern 4 und 6 sowie mit den Hilfskontakten 8, 10 mechanisch gekoppelt ist.

Ein separater Steuerbaustein 14 zur Verzögerung der Auslösung bei absinkender Netzspannung ist eingangsseitig an die von den Leitungsschutzschaltern 4 und 6 zu schützenden Leitungen L1 bzw. L2 angeschlossen. Ausgangsseitig ist der Steuerbaustein 14 mit dem Unterspannungsauslöser 2 elektrisch verbunden. Dabei erfolgt die ausgangsseitige Verbindung des Steuerbausteins 14 mit der Auslöseeinrichtung 12 des Unterspannungsauslösers 2 über dessen Anschlüsse m, n und über die Schaltstrecken 8, 10 sowie über Verbindungsleitungen 13a, 13b, die die Anschlüsse o, p des Unterspannungsauslösers 2 mit dessen Anschlüssen k bzw. l verbinden. Zur Unterbrechung der Verbindung der Anschlüsse p und k ist in die Verbindungsleitung 13a ein Taster 15 geschaltet.

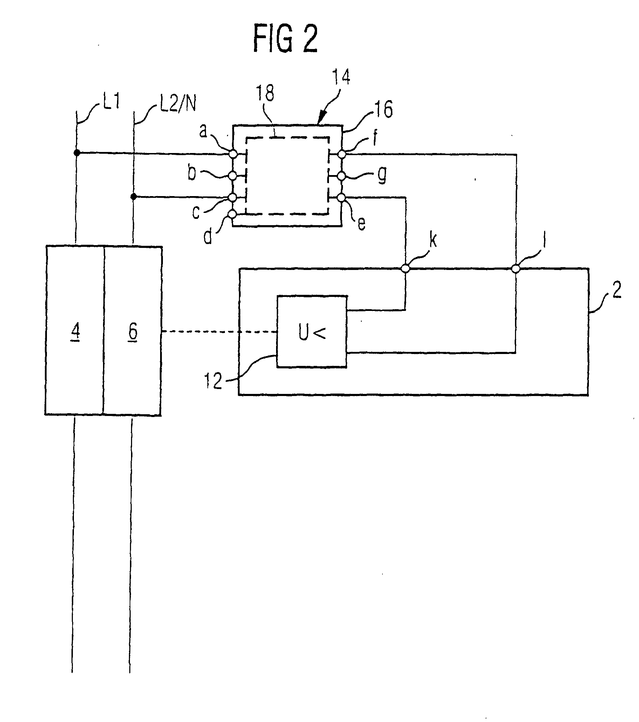

Wie Figur 2 zeigt, kann der Steuerbaustein 14 ausgangsseitig auch direkt über die Anschlüsse k, l mit der Auslöseeinrichtung 12 verbunden sein.

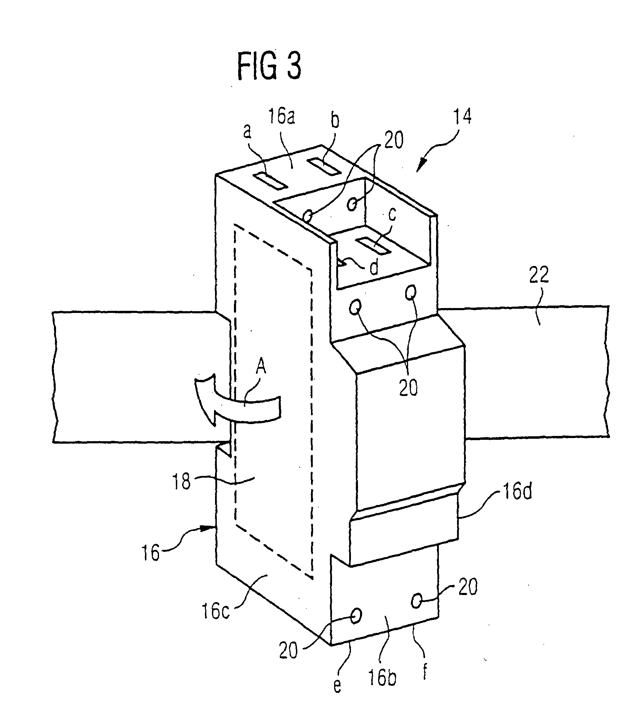

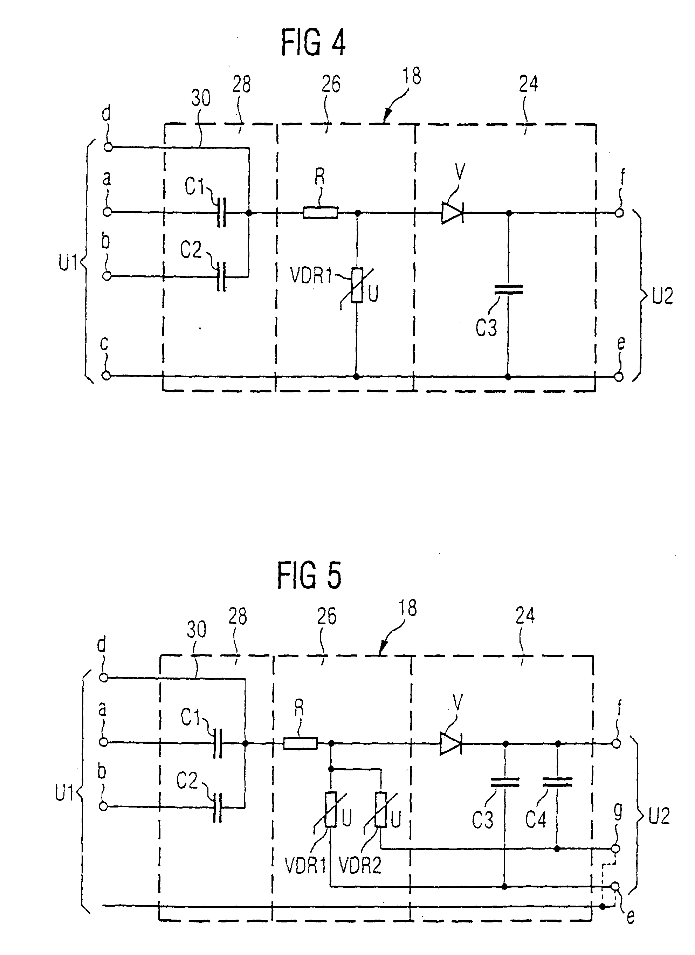

Der Steuerbaustein 14 enthält innerhalb dessen in FIG 3 perspektivisch dargestellten separaten Gehäuse 16 eine elektronische Schaltung oder einen elektronischen Schaltkreis 18 zur Auslösezeitverzögerung des Unterspannungsauslösers 2 sowie zur Schutzbeschaltung des zur Auslösezeitverzögerung vorgesehenen Bauelements (FIG 4 und 5). Zur elektrischen Beschaltung des Steuerbausteins 14 innerhalb der Schutzschalteranordnung 2 bis 6 umfaßt der Steuerbaustein 14 gehäuseseitig zugängige Klemmkontakte a bis g, die in Öffnungen 20 an den Schmalseiten 16a und 16b des Gehäuses 16 angeordnet und über diese zugänglich sind.

Ebenso wie die Leitungsschutzschalter 4, 6 und der Unterspannungsauslöser 2 ist auch das Gehäuse 16 des Steuerbausteins 14 in Bewegungsrichtung A auf eine Sammelschiene 22 in Form einer genormten Hutschiene aufsetzbar. Das Gehäuse 16 kann mit einem üblichen Gehäuse eines Unterspannungs- oder Arbeitsstromauslösers identisch sein, wobei das dort vorgesehene Schaltschloß mit aus dem Gehäuse herausgeführtem Schaltknebel entfallen kann.

Das Gehäuses 16 ist mechanisch unabhängig von den übrigen auf der Sammelschiene 22 angeordneten Schaltelementen oder Bauteilen 2 bis 6 und somit vorteilhafterweise frei anbaubar. Es wird zweckmäßigerweise an einem Ende der Sammelschiene 22 angeordnet. Die durch das Fehlen des Schaltknebels entstehende Öffnung kann mittels einer Abdeckung verschlossen werden.

Die Figuren 4 und 5 zeigen alternative Varianten eines Verzögerungsgliedes als Teil der elektronischen Schaltung 18 des Steuerbausteins 14. Die Varianten unterscheiden sich prinzipiell einerseits durch die Anzahl der die Auslösezeitverzögerung realisierenden Kondensatoren sowie andererseits durch die Anzahl möglicher externer Verbindungen der Klemmkontakte a bis g.

So umfaßt bei der Variante gemäß FIG 4 der Steuerbaustein 14 in einer ersten Teilschaltung 24 der elektronischen Schaltung 18 einen einzelnen Kondensator C3 zur Ansprechzeitverzögerung, der innerhalb des Gehäuses 16 einerseits mit dem Klemmkontakt f und einer zur Gleichrichtung dienenden Diode V sowie andererseits mit den Klemmkontakten c und e verbunden ist. In einer zweiten Teilschaltung 26 der elektronischen Schaltung 18 ist die dem Kondensator C3 vorgeschalten Diode V anodenseitig mit einem Vorwiderstand R sowie mit einem spannungsabhängigen Widerstand VDR1 verbunden, der seinerseits mit den Klemmkontakten c bzw. e verbunden ist. Der Vorwiderstand R bildet mit einem Kondensator C1 oder C2 in einer dritten Teilerschaltung 28 ein Begrenzungsglied oder RC-Glied, daß mit den Klemmkontakten a bzw. b verbunden ist.

Mit dieser Schaltung 18 sind verschiedene Kombinationen üblicherweise vorhandener Unterspannungsauslöser 2 möglich. So werden bei einer Eingangsspannung U1 von 230V AC (Wechselspannung) die eingangsseitigen Kontaktklemmen a und c mit den Netzleitungen L1 und L2 verbunden. Bei einem für eine Ausgangsspannung U2 von 110V DC (Gleichspannung) ausgelegten Unterspannungsauslöser 2 (110V-Variante) wird dieser mit den ausgangsseitigen Klemmkontakten e und f des Steuerbausteins 14 verbunden. Bei einem für eine Ausgangsspannung U2 von 24V DC ausgelegten Unterspannungsauslöser 2 (24V-Variante) und gleicher Eingangsspannung U1 von 230V AC erfolgt die eingangsseitige Kontaktierung des Steuerbausteins 14 über die Klemmkontakte b und c.

Bei einer Eingangsspannung U1 von 110V DC (Gleichspannung) erfolgt die eingangsseitige Kontaktierung über die Klemmkontakte c und d, während die ausgangsseitige Klemmkontaktierung unverändert ist. Der Klemmkontakt d ist innerhalb der dritten Teilschaltung 28 über eine Verbindungsleitung 30 direkt an den Widerstand R der zweiten Teilschaltung 26 geführt. Bei einer Eingangsspannung U1 von 24V DC erfolgt eine sowohl eingangsseitig als auch ausgangsseitig mit der 110V-Variante identischen Kontaktierung. Bei allen diesen Varianten sind externe, d.h. außerhalb des Gehäuses 16 des Steuerbausteins 14 vorzunehmende Verbindungen nicht erforderlich, wobei sich für die 110V-Variante und für die 24V-Variante des Unterspannungsauslösers 2 unterschiedliche Verzögerungszeiten ergeben. Der Vorteil dieser Schaltung liegt in der definierten Eingangs- und Ausgangsseite.

Die Klemmkontakte e und c können auch dazu verwendet werden, zusätzlich zu dem Kondensator C3 mit dem spannungsabhängigen Widerstand VDR1 einen Kondensator C4 zuzuschalten. Dies ist in FIG 5 dargestellt. Bei dieser Schaltungsvariante der elektronischen Schaltung 18 ist die Schutzbeschaltung des eigentlichen Verzögerungsgliedes identisch mit der in FIG 4 dargestellten Variante, wobei auch für den zusätzlichen Kondensator C4 ein spannungsabhängiger Widerstand VDR2 vorgesehen ist. Die beiden Kondensatoren C3 und C4 sind einerseits an die Diode V kathodenseitig angeschlossen und mit dem Klemmkontakt f verbunden. Andererseits ist der Kondensator C3 mit dem Klemmkontakt e verbunden, während der Kondensator C4 mit dem Klemmkontakt g verbunden ist.

Bezüglich einer Eingangsspannung U1 von 230V AC erfolgt für die 110V-Variante des Unterspannungsauslösers 2 eine Kontaktierung der Eingangsspannung U1 - je nach gewählter Verzögerungszeit - mit den eingangsseitigen Klemmkontakten a und e oder g, während bei der 24V-Variante des Unterspannungsauslösers 2 die Kontaktierung der eingangsseitigen Klemmkontakte b und e bzw. g erfolgt. Ausgangsseitig können unterschiedliche Auslösezeitverzögerungen oder Ansprechzeiten vom Anwender selbst erstellt werden, indem der Unterspannungsauslöser 2 mit den Klemmkontakten f, g oder f, e verbunden wird.

Durch Verbindung der Klemmkontakte e und g ist eine Parallelschaltung der Kondensatoren C3 und C4 mit einer in Abhängigkeit von den entsprechenden Kapazitätswerten realisierten Auslösezeitverzögerung realisiert.

Bei einer Eingangsspannung U1 von 110V DC oder 24V DC und gleicher Ausgangsspannung U2 kann durch Anschluß des Unterspannungsauslösers 2 an die Klemmkontakte d und e oder an die Klemmkontakte d und f die entsprechende Auslösezeitverzögerung festgelegt werden. Auch kann bei dieser Gleichstromvariante wiederum durch externe Verbindung der Klemmkontakte e und g eine Parallelschaltung der beiden Kondensatoren C3 und C4 realisiert und somit die Auslösezeitverzögerung variiert werden.

In Abhängigkeit von den jeweiligen, extern zu erstellenden Verbindungen ergeben somit die verschiedenen Alternativen mit unterschiedlichen Auslösezeitverzögerungen oder Überbrückungszeiten. Diese können jederzeit variiert werden, indem die Verbindungen der Klemmkontakte a bis g entsprechend geändert werden. Die Variante gemäß FIG 5 ermöglicht somit dem Anwender die jeweilige Auslösezeitverzögerung, d. h. die Verzögerungszeit in drei Stufen selbst festzulegen.

## Patentansprüche

1. Steuerbaustein (14) für einen auf eine Sammelschiene (22) aufsetzbaren Unterspannungsauslöser (2), mit einer in einem separaten und auf die Sammelschiene (22) aufsetzbaren Gehäuse (16) angeordneten elektronischen Schaltung (18) zur Auslösezeitverzögerung.

2. Steuerbaustein nach Anspruch 1, wobei die Schaltung (18) zur Auslösezeitverzögerung in einer ersten Teilschaltung (24) mindestens einen Kondensator (C3,C4) aufweist, der zwischen zwei am Gehäuse (16) vorgesehene Klemmkontakte (e,f,g) geschaltet ist.

3. Steuerbaustein nach Anspruch 2, wobei die erste Teilschaltung (24) eine Diode (V) aufweist, die kathodenseitig mit dem oder jedem Kondensator (C3,C4) verbunden ist.

4. Steuerbaustein nach einem der Ansprüche 1 bis 3, wobei die Schaltung (18) eine zweite Teilschaltung (26) zur Spannungsbegrenzung umfaßt.

5. Steuerbaustein nach Anspruch 4, wobei die zweite Teilschaltung (26) mindestens einen spannungsabhängigen Widerstand (VDR1,VDR2) und einen Widerstand (R) umfaßt.

6. Steuerbaustein nach Anspruch 1 oder 5, wobei die Schaltung (18) eine dritte Teilschaltung (28) mit zwei Kondensatoren (C1,C2) aufweist, die mit jeweils einem am Gehäuse (16) vorgesehenen Klemmkontakt (a,b) verbunden sind.

7. Steuerbaustein nach Anspruch 6, wobei die dritte Teilschaltung (28) eine direkte Verbindung (30) eines der Widerstände (R,VDR1) der zweiten Teilschaltung (26) zu einem am Gehäuse (16) vorgesehenen Klemmkontakt (d) aufweist.

8. Steuerbaustein nach einem der Ansprüche 1 bis 7, wobei das Gehäuse (16) eine Anzahl von Öffnungen (20) zur Aufnahme von Klemmkontakten (a bis g) aufweist.

9. Steuerbaustein nach Anspruch 8, wobei mindestens zwei Klemmkontakte (a,b) zum Anschluß an eine Netzleitung (L1,L2) und mindestens zwei Klemmkontakte (e,f) zum Anschluß des Unterspannungsauslösers (2) vorgesehen sind.

10. Verwendung eines Steuerbausteins (14) nach einem der Ansprüche 1 bis 9 als separat anbaubares Verzögerungsglied zur variierbaren Auslösezeitverzögerung eines Unterspannungsauslösers (2) in einer Schutzschalteranordnung mit einem Leitungsschutzschalter (4,6).

## Claims

1. Control module (14) for an undervoltage release (2) which can be mounted on a busbar (22), with an electronic circuit (18) for the triggering time delay arranged in a separate housing (16) that can be mounted on the busbar (22).

2. Control module according to Claim 1, the circuit (18) for the triggering time delay having at least one capacitor (C3, C4) in a first part-circuit (24), said capacitor being switched between the two terminal contacts (e, f, g) provided on the housing (16).

3. Control module according to Claim 2, the first part-circuit (24) having a diode (V), the cathode end of which is connected with the (or each) capacitor (C3, C4).

4. Control module according to one of Claims 1 to 3, the circuit (18) including a second part-circuit (26) for current limiting.

5. Control module according to Claim 4, the second part-circuit (26) having at least one voltage-dependent resistor (VDR1, VDR2) and a resistor (R).

6. Control module according to Claim 1 or 5, the circuit (18) having a third part-circuit (28) with two capacitors (C1 and C2) that are each connected to a terminal contact (a, b) provided on the housing (16).

7. Control module according to Claim 6, the third part-circuit (28) having a direct connection (30) of one of the resistors (R, VDR1) of the second part-circuit (26) to a terminal contact (d) provided on the housing (16).

8. Control module according to one of Claims 1 to 7, the housing (16) having a number of openings (20) to take terminal contacts (a to g).

9. Control module according to Claim 8, at least two terminal contacts (a, b) being provided for connection to a supply line (L1, L2) and at least two terminal contacts (e, f) being provided for connection of the undervoltage release (2).

10. The use of a control module (14) according to one of Claims 1 to 9 as a separately-mountable delay element for varying the triggering time delay of an undervoltage release (2) in a protective circuit arrangement with a line circuit-breaker (4, 6).

## Revendications

1. Module (14) de commande d'un déclencheur (2) à minimum de tension qui peut être posé sur une barre (22) collectrice, comprenant un montage (18) électronique, disposé dans un boîtier (16) distinct et pouvant être posé sur la barre (22) collectrice, ce montage étant destiné à retarder l'instant de déclenchement. .

2. Module de commande suivant la revendication 1, dans lequel le montage (18) destiné à retarder l'instant de déclenchement comprend, dans un premier sous-montage (24), au moins un condensateur (C3, C4), qui est monté entre deux contacts (e, f, g) de bornes prévus sur le boîtier (16).

3. Module de commande suivant la revendication 2, dans lequel le premier sous-montage (24) comprend une diode (V) qui est reliée du côté de la cathode avec ledit au moins un condensateur (C3, C4).

4. Module de commande suivant l'une quelconque des revendications de 1 à 3, dans lequel le montage (18) comprend un deuxième sous-montage (26) de limitation de la tension.

5. Module de commande suivant la revendication 4, dans lequel le deuxième sous-montage (26) comprend au moins une résistance (VDR1, VDR2), qui varie en fonction de la tension et une résistance (R).

6. Module de commande suivant la revendication 1 ou 5, dans lequel le montage (18) comprend un troisième sous-montage (28) ayant deux condensateurs (C1, C2) qui sont reliés respectivement, à un contact (a, b) de borne prévu sur le boîtier (16).

7. Module de commande suivant la revendication 6, dans lequel le troisième sous-montage (28) comprend une liaison (30) directe de l'une des résistances (R, VDR1) du deuxième sous-montage (26), à un contact (d) de borne prévu sur le boîtier (16).

8. Module de commande suivant l'une des revendications 1 à 7, dans lequel le boîtier (16) comprend un certain nombre d'ouvertures (20) de réception de contacts (a à g) de bornes.

9. Module de commande suivant la revendication 8, dans lequel sont prévus au moins deux contacts (a, b) de bornes pour le raccordement à une ligne (L1, L2) de réseau et au moins deux contacts (e, f) de bornes pour le raccordement du déclencheur (2) à minimum de tension.

10. Utilisation d'un module (14) de commande suivant l'une des revendications 1 à 9, comme élément temporisateur, pouvant être installé de manière séparée, pour temporiser avec possibilité de variations le déclenchement de déclencheur (2) à minimum de tension, dans un dispositif de coupe-circuit ayant un disjoncteur (4, 6).
